# EUROPEAN PATENT SPECIFICATION

(11) **EP 2 257 153 B1**
(45) Date of publication and mention of the grant of the patent: **11.11.2020**
(21) Application number: 09724059.2
(22) Date of filing: 06.03.2009
(51) Int. Cl.: A01L 3/04

(54) **A SOLE FOR USE ON HOOVES AND A SHOE COMPRISING SUCH A SOLE**
SOHLE ZUR VERWENDUNG AUF HUFEN UND SCHUH MIT EINER SOLCHEN SOHLE
SEMELLE DESTINÉE À ÊTRE UTILISÉE SUR DES SABOTS ET FER COMPRENANT LADITE SEMELLE

(30) Priority: 26.03.2008 NO 20081472
(43) Date of publication of application: 08.12.2010
(73) Proprietor: Equine Fusion AS, 4042 Hafrsfjord (NO)
(72) Inventor: REVHEIM, Sven, 4042 Hafrsfjord (NO); ALI, Azfor, 4054 Tjelta (NO)
(74) Representative: Håmsø Patentbyrå AS
(86) International application number: PCT/NO2009/000078
(87) International publication number: WO 2009/120085

(56) References cited:
- EP-A1- 1 762 144
- EP-A2- 1 210 873
- WO-A1-00/54577
- WO-A1-2009/050750
- GB-A- 358 446
- US-A- 1 043 978
- US-A- 4 981 010
- US-A- 6 122 901
- US-B1- 6 305 328

## Description

### Technical Field

The present invention is related to shoes for use on hoofed and cloven-hoofed animals.

### Background Art

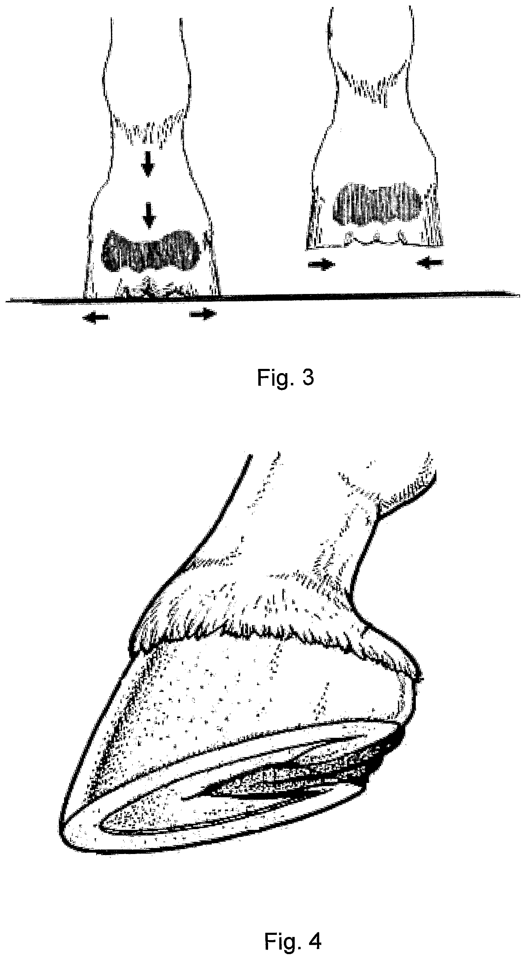

A horse is often referred to as an animal with five hearts, this because the hooves are such an essential part for the circulation of blood. The hooves expand when the horse treads and contracts when the horse removes weight from the hoof, fig. 3. Only the kidney and the liver are of the same importance as the hooves. Regeneration of tissue, horn and other structures in the hoof is dependent on a constant supply of nourishment through the flow of blood in the hoof.

From the nature a horse or any other hoofed or hoof-cloven animal is not created for use of man maid shoes. A man made shoe of the traditional type will affect the wear and tear of the hoof and the gait of the animal.

From the nature the wear of the hoof is in balance with the regeneration of tissue and horn.

Use of shoe for horses is commonly associated with an iron shoe which is nailed to the hoof. This is an old fashioned method which has turned out to be controversial as this method restricts the growth of the hoof. Further, it hampers a natural development of the shape of the hoof. As indicated above the hooves have a tremendous effect on a horse's general condition. The steady growth of tissue is hampered by the rigid form of the iron shoe. Further an iron shoe does not provide any shock absorbing effect and consequently lead to an increase of wear of tendons and muscles. Still further the expansion and contraction of the hoof due to the horses' movement is completely hampered by the iron shoe and the hooves ability to pump blood is severely affected, fig. 3.

Iron shoes are also risky as the horse maybe nail pricked, that is penetration of the sole of the horse's hoof by a nail or other sharp object to the depth of the sensitive laminae which causes acute lameness and may lead to infection, hoof abscess and tetanus. The horse may also be nail bind which indicates a nail prick of the horse's hoof caused by the blacksmith driving a nail too close to the soft tissues and causing pressure on the sensitive laminae without penetrating them.

Further, shoeing is a time consuming process. And an iron shoe is heavy on the hoof.

A hoof that is shod for years looses its original shape and function. The hoof becomes soft and stands less wear than that of barefooted horses. The hoof walls grows down from the coronal band (hair line) with an average grow rate of 7 mm per month.

When the shoes are removed it improves the circulations of blood in the hoof. The corium, a dermo-epidermal, highly vascularized layer called the laminae which produces the cornified specialised structures of the hoof receives more nourishment hence stimulating production of high quality hoof walls, frog and sole. After approximately one and a half year the whole hoof will be made of this quality corneous substance.

A few years ago it was considered exceptional to remove the iron shoes of a competition horse. Today barefoot horses compete within all disciplines. However, removing the shoe may cause many years of difficulties in the changeover period, in particular it may give rise to footsoreness which hampers the changeover frequency to barefootness.

Increased understanding of trimming and the use of novel shoes made by plastic have made it possible for most horses to return to training or work immediately.

It is quite common to use shoes during riding and then remove the shoes after riding. These shoes are commonly made of rubber or plastic and they have an adjustment mechanism for screws adapted to be fixed to the sole/hoof.

Further it has been developed shoes that are designed to be pulled over the hoof which is fastened to the hoof in different manners. This novel type of shoe is commonly used during endurance ride and for rehabilitation purposes. They are also used when a barefoot horse shall be ridden on coarse gravel which otherwise may be painful for the horse.

A drawback with the new plastic and rubber shoes is that it is necessary for the horse to enter the shoe by treading or that a person exercises enough force to press the shoe onto the hoof. This is illustrated in U.S. D440,363 S fig. 1 and in U.S. 2005166556 fig. 2. The process of fixing the shoe according to these illustrations is cumbersome and may also involve a risk to the person who carries out the work. When a shoe is drawn over the hoof many horses will react by becoming restless which makes the job difficult and dangerous this is in particular the case as the person is bent over the hoof which makes it easy for the horse to kick the person. These shoes are made of a material which is drawn together by an adjustment mechanism over/around the hoof and which expands when the tensioning means is loosened. Other known shoes for hoofs are disclosed in US6305328, EP1762144 and EP1210873.

As the hoof is tread down into the shoe and as the shoe also tries to expand during use it will easily slip off during riding. The hoof in itself expands and contracts during riding giving rise to wear and tear of the shoe and the hoof, further experience has shown that shoes or parts of shoes fastened with screws, wires or the like easily fall of during riding. It is a security issue if a shoe fall of or partly fall off in that the horse may well stumble. The risk that screws loosens and that shoes fall of and lead to serious wounds is considerable with shoes according to the prior art.

Further, inspection of the fit is difficult and there is no indication on how the shoe is adapted to the hoof, if it squeezes the hoof or not. The shoes are made rigid in a predetermined shape hampering the natural expansion and contraction of the hooves. Shoeing a horse should be a question of following the anatomy of the hoof, the comfort of the horse, the security of the farrier/blacksmith and the rider. Further, as indicated above, the hoof is composed of sensitive parts and the novel shoes of predetermined shape with edges projecting up from the perimeter of the sole of the shoe exerts a pressure on the heel of the horse, ref. figure 4.

Shoes of today do not take into consideration the shape or the function of the horses' heels. The pressure from adjustment mechanisms exerts the same pressure on the heel as on the walls of the hoof whilst the hoof withstands this pressure the sensitive and softer part of the heel may not. The pressure on the soft skin between the foot and the hoof exerted by the shoe or the shoes adjustment mechanism gives the same discomfort as a too small shoe for a human being.

The known shoes do not include any means for shock absorption which obviously would relieve the stress on the horses' muscles, tendons or limbs during for example sprang riding.

Shoes of a closed type do not take into account that heat and sweat will be generated hence leading to soreness and gall.

Many people become wounded each year caused by riding, care and shoeing of hoofed animals. Hoofed animals and not at least horses may become restless if the shoeing takes unnecessarily long time resulting in that the shoeing may become a risky business for the farrier/blacksmith. Hence it is a wish to make the process of shoeing faster, simpler and thus also safer.

It is also a fact that equestrians are exposed to danger due to horseshoes that has been wrongly mounted or badly secured so that the shoe falls off during riding; it is therefore a need for a shoe that can be securely fixed to the hoof.

### Disclosure of Invention

It is an object of the present invention to provide a sole for a shoe adapted for use on hoofed animal or cloven-hoofed animals which gets rid of the drawbacks and problems indicated above. These and other objects are met by a sole according to claim 1.

In particular, the objects are met by a sole for a shoe adapted for use on hoofed or cloven-hoofed animals. The sole is assembled into a single peace at least comprising:
a forward, a rear part and at least a coupling/joint arranged substantially transversal to the front back axis of the sole, where the sole assembly forms an integral part, and where the at least one coupling/joint is one of: grooves, a ductile/elastic material, mechanical couplings, silicon, composite, a combination of a hinge and an elastic material or buckles, which allows the at least one forward part and the at least one rear part to move completely or partly independent of each other when shooing the hoofed or cloven-hoofed animals and during use.

Further objects according to the invention is met by a shoe adapted for use on hoofed or cloven-hoofed animals comprising a sole according to the invention with sides protruding from the sole and fixed to the perimeter of the sole where the shoe comprises at least one forward and at least one rear part protruding from the sole and fixed to the perimeter of the sole. The at least one forward part comprises to side pieces which at its bottom end is fixed to the sole in a substantial part of the forward parts' perimeter so that the side pieces when the shoe is mounted on a hoof completely or partly encloses the forward part of the hoof. The at least one rear part fixed to the shoes' at least one rear part in a substantial part of the length of the rear part, so that the sole and side pieces together forms a shoe for use on hoofed or cloven-hoofed animals.

Further advantages will be apparent from the appended dependent claims.

### Brief Description of Drawings

In the following a detailed description of the present invention is disclosed with reference to the enclosed drawings, in which:

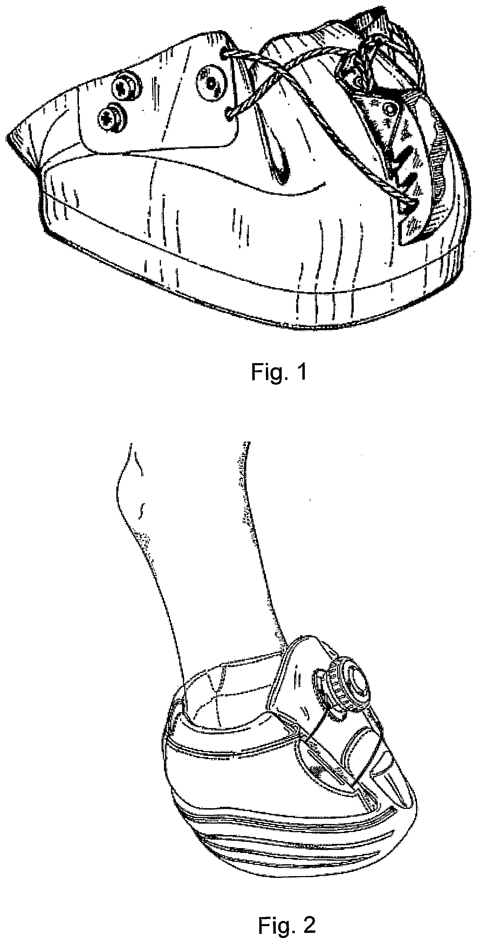

**fig. 1** shows prior art in accordance with U.S. D440363 S,
**fig. 2** shows prior art in accordance with U.S. 2005166556,
**fig. 3** shows the principle of the blood circular system of a horses' hoof under gait,
**fig. 4** shows a healthy hoof without a shoe and it also shows the sensitive parts of the heel,
**fig. 5** shows one example of a shoe 1 in accordance with the present invention with in closed position with an exterior adjustments and securing mechanism 6 and two frontal parts 12, 13 which can be drawn over each other so that the shoe is evenly tighten on both sides of the hoof,
**fig. 6** is an example of the backside of a shoe 1 according to the present invention comprising a hard full shell 8, a soft frame 9 following the shape of the heel and a shock absorbing system 15,
**fig. 7** shows an example of the shoe 1 seen from the front and an example of its frontal parts 12, 13 adapted to be drawn over each other so that the shoe is evenly tightened on both side of a hoof
**fig. 8** shows a shoe 1 according to the present invention in an open position mounted on a hoof with a sock 17 drawn over the hoof where the shoe 1 is split into a front part 10 and a rear part 11 divided by a flexible joint,
**fig. 9** is a sole 5 and segments 2, 3, 4 which allows for movement in the sole,
**fig. 10** shows an example of a shoe 1 according to the present invention in an open position comprising an exterior secure-, lock- and adjustment mechanism 6, shock absorbing system 15, an interior sock 17 placed on the hoof, a ventilation system 16 and where the shoe is divided into a frontal 10 and rear part 11 with the flexible joint/connection 14 there between,
**fig 11a, b and c** is a sectional view of a sole 5 with inner tightening and locking mechanism 7,

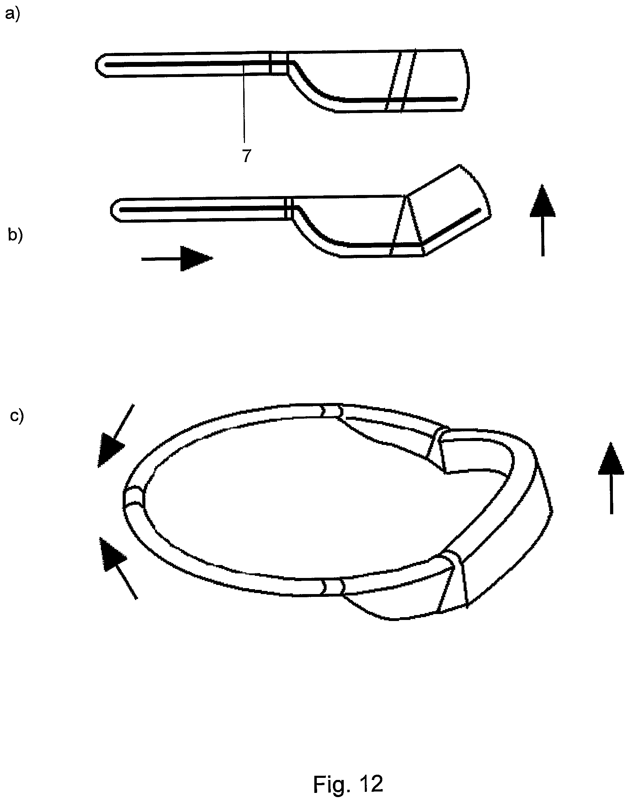

**fig 12 a, b and c** is a sectional view of a sole 5 with inner tightening and locking mechanism 7,

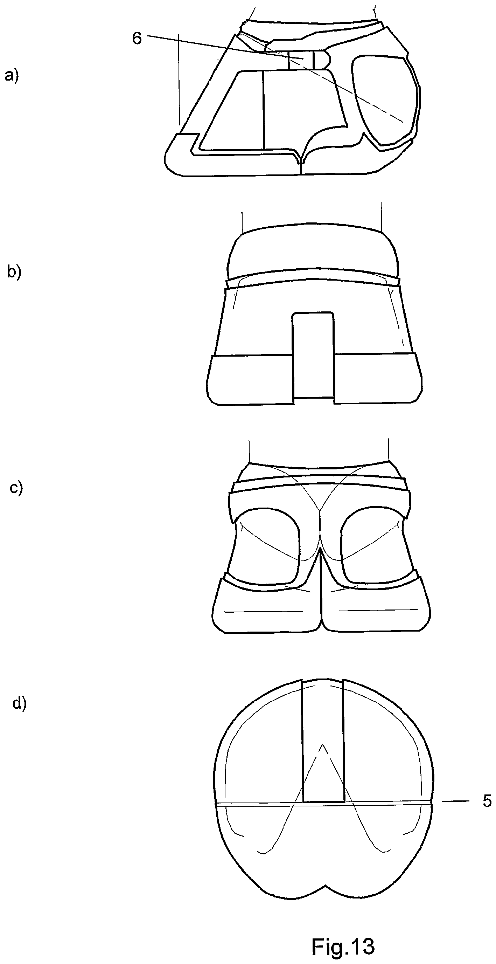

**fig 13 a, b and c** shows an alternative embodiment for a shoe 1 comprising an outer lock-, securing- and adjustment mechanism 6 according to the present invention without the two front parts 12, 13 which is drawn over each other,
**fig 14** shows a shoe 1 according to one example of the present invention with shock absorbing cushion/cushions 15 as a separate part adapted to be fixed to the outside of a shoe 1,
**fig. 15 a, b and c** shows a sole 5's joint/connections 14 which may comprise two parts,

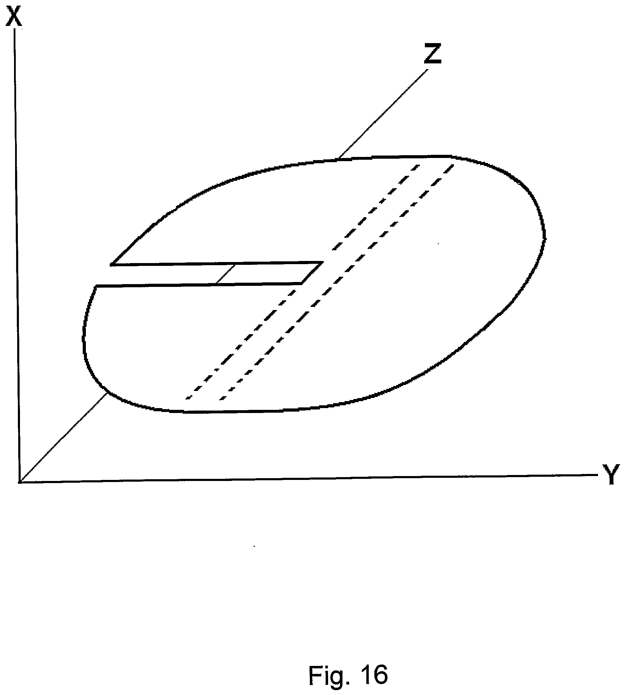

**fig. 16** shows a sole 5 in a system of coordinates for indication of the movement and flexibility of the sole 5,
**fig. 17 a, b, c, d and e** shows the soles 5's different variations in flexibility/movement related to the X, Y and Z-axis,
**fig. 18 a, b, c and d** shows the soles 5's different variations in flexibility/movement related to the X, Y and Z-axis,

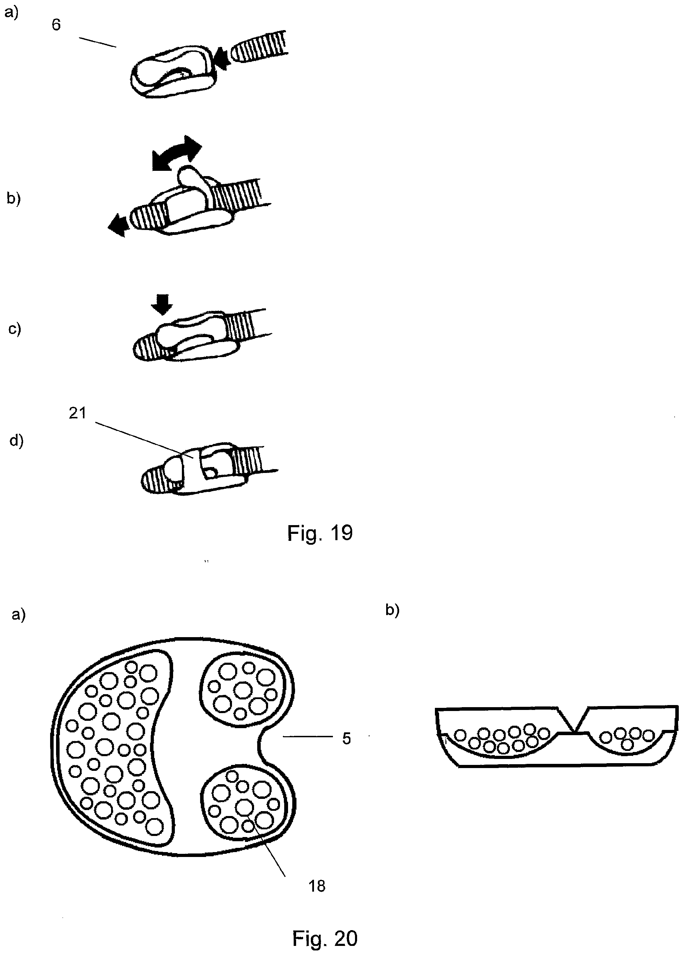

**fig. 19 a, b, c and d** shows an example of a fastening-, adjustment-, tightening- 6 and securing device 21 according to one aspect of the present invention,
**fig. 20** **a and b** shows the sole 5 comprising a system of pellets seen from above 20a and from the side 20b,
**fig 21** is an example of a constructions of a shoe 1 according to one aspect of the present invention,
**fig. 22** is an example of opening/closing of a shoe 1 comprising frontal parts 10 and rear parts 11 where a is open position and b is closed position,

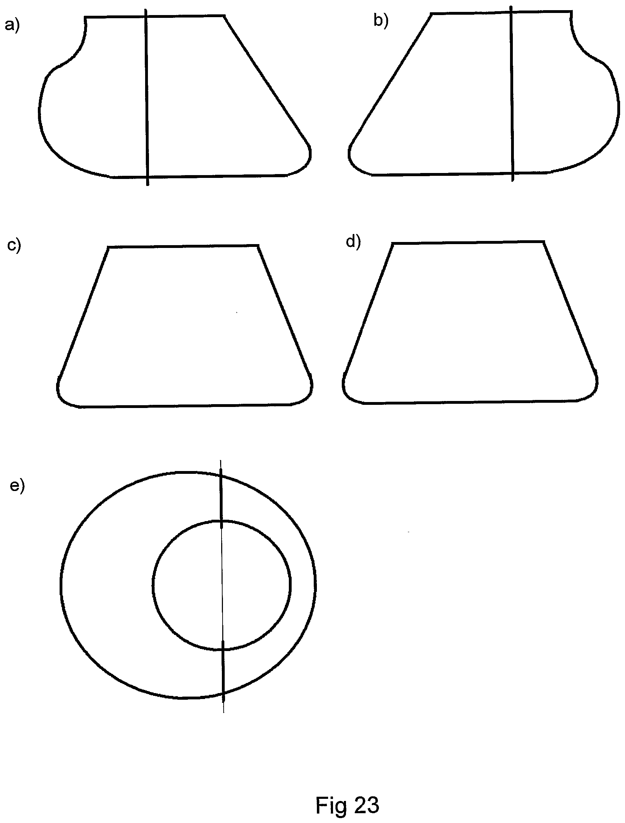

**fig 23 a, b, c, d and e** shows a shoe 1 in accordance with one embodiment of the present invention seen from the right-, left-, rear-, and front side of the shoe 1 respectively and as a sectional view from above, where the solid line illustrates a possible area for splitting the shoe 1 into two parts,

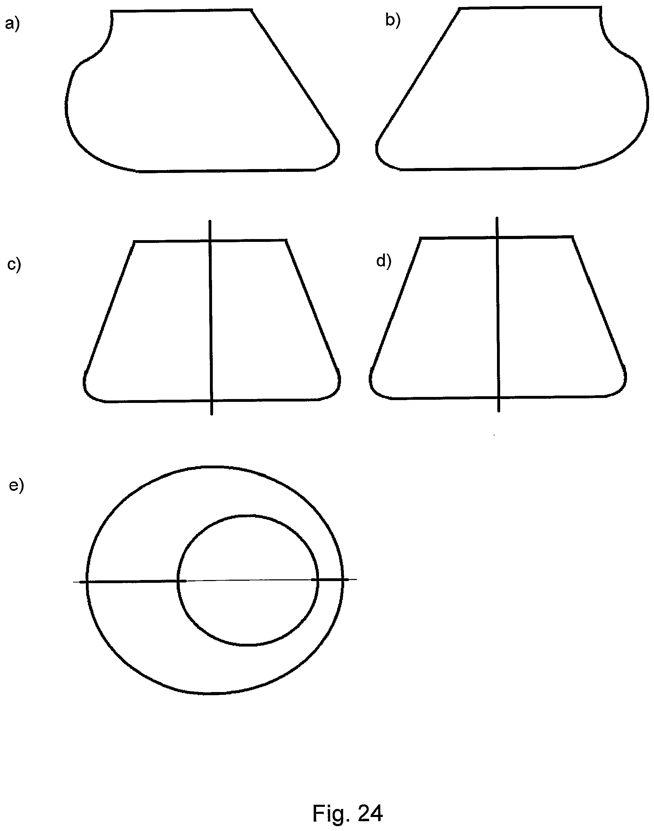

**fig 24 a, b, c, d, and e** shows a shoe 1 in accordance with another aspect of the present invention seen from the right-, left-, rear-, and front side of the shoe 1 respectively and as a sectional view from above, where the solid line illustrates a possible area for splitting the shoe 1 into two parts,

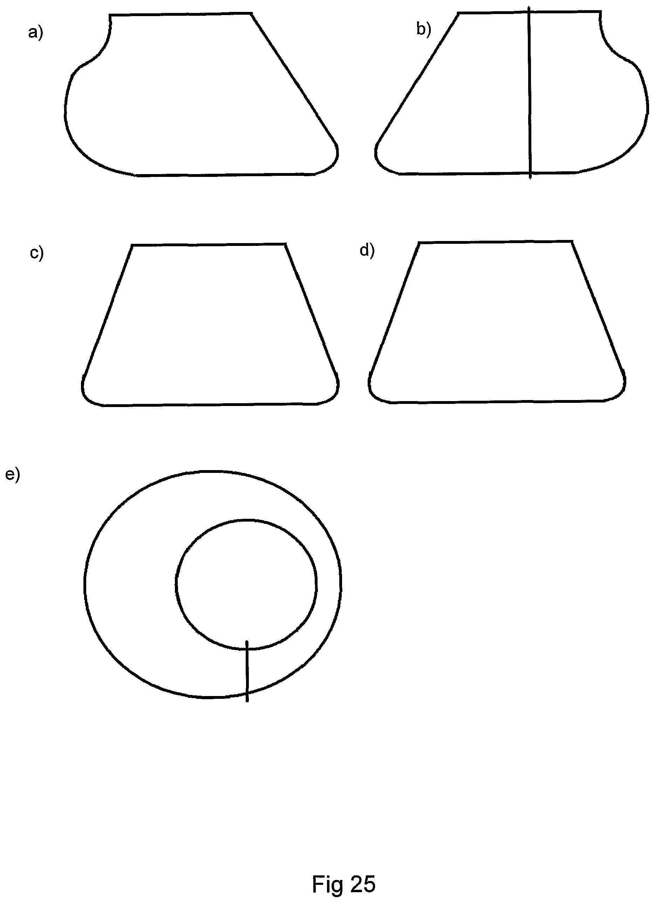

**fig 25** **a b, c, d, and e** shows a shoe 1 in accordance with another aspect of the present invention seen from the right-, left-, rear-, and front side of the shoe 1 respectively and as a sectional view from above, where the solid line illustrates a possible area for splitting the shoe 1 into two parts,
**fig 26** **a and b** shows a flexible sole 5 with a system comprising mutual moving parts for protection of hoof or cloven hoof where a shows the individual parts and b shows parts assembled to form a complete sole 5, and
**fig 27** a shows the sock 17, figure b shows the sock 17 drawn over the hoof with a folding in upward direction, figure c shows the folding in a downward direction and figure d shows an example of the sock 17 fully mounted on a hoof with the folding over the shoe 1.

### Mode(s) for Carrying Out the Invention

In the following the present invention will be described in detail supported by the appended drawings.

Wherever the notion of horse, horse's hoof, or other allusions that the invention is limited to cover a shoe device for a horse it shall be understood that the wording horse is used as an example for ease of understanding, hence the invention and its basic ideas shall find use for other hoofed or cloven-hoofed animals such as donkeys, mules, oxen, camels and more.

The present inventions relates to a shoe 1 for use on animals such as horses. When designing a shoe 1 in accordance with the present invention care is taken so as not to hamper the animals' natural movement or function of the hooves. The shoe is designed with emphasis on anatomy and comfort for the animal so that the hoofs functions is taken care of.

A horse is often referred to as an animal with five hearts, this because the hooves are such an essential part for the circulation of blood. The hooves expand when the horse treads and contracts when the horse removes weight from the hoof, fig. 3. To allow this function of the hoof it is essential that the shoes allow these functions to continue unobstructed.

The hoof is composed of a combination of flexible, elastic and rigid parts to accomplish correct movement and simultaneously stability in the gait. The invention is further characterised in that the risk of personal injury and injury to the animal is kept at a minimum. Correct mounting and fit of a shoe 1 according to the present invention is easy to observe hence reducing the risk of shoes that falls of and it is as indicated above made for comfort and natural fit to the horse.

The area of applications for a shoe 1 according to the present invention is within all normal activity such as competition riding, show jumping, normal equitation, trotting, gallop, rehabilitation of a hoof, work or changeover from using shoes to be barefoot. The shoe is easy to fit without the use of special tools or extra spares. It is securely fixed so the risk for injury to the horse or rider is substantially reduced.

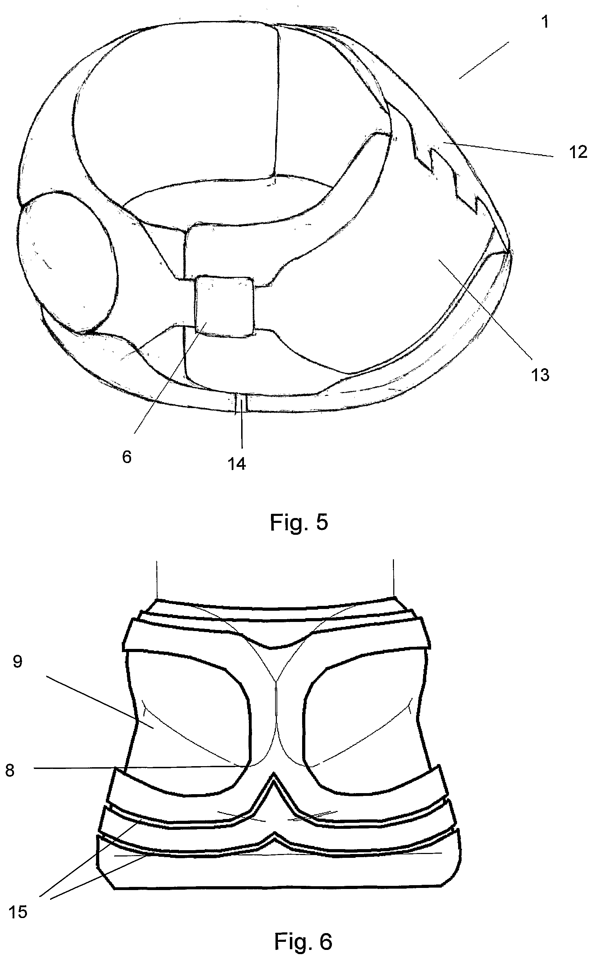

The shoe 1 according to the present invention is safer during shoeing and dismounting and in use. It is among others also characterised by its simple and easy to use mechanism for mounting and demounting, further it takes care of the soft and sensitive parts of the hoof as it is designed so as to take into consideration the horny parts of the hoof as well as the soft and sensitive parts around the heel. The heel is sensitive to pressure on the back of the hoof as well as on the underside, the frog ref. fig. 4. As the shoe 1 according to one embodiment of the present invention includes a soft and flexible frame 9 encapsulated in a hard shell material 8 adapted to protect the sensitive areas of the hoof in an optimal way while still maintaining enough strength and hardness to maintain stability and to keep the shoe in position fig. 6.

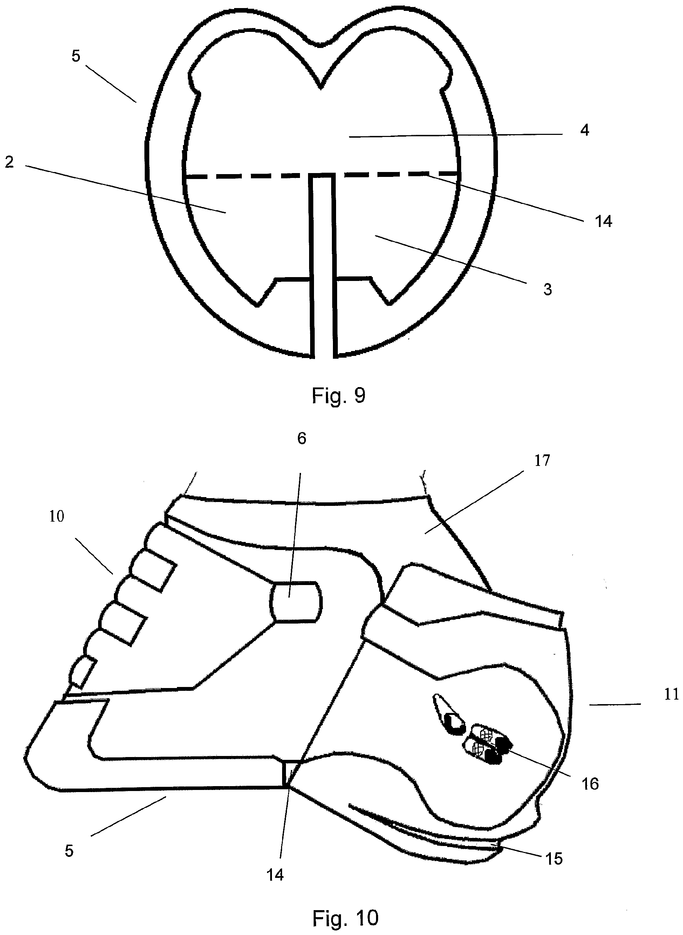

The shoe according to one example of the present invention may include a segmented sole 5 fig 9, i.e. a sole that is at least divided into two parts which is mutually movable through a joint/coupling in between the two parts hence the shoe will adapt better to the movable parts of the hoof.

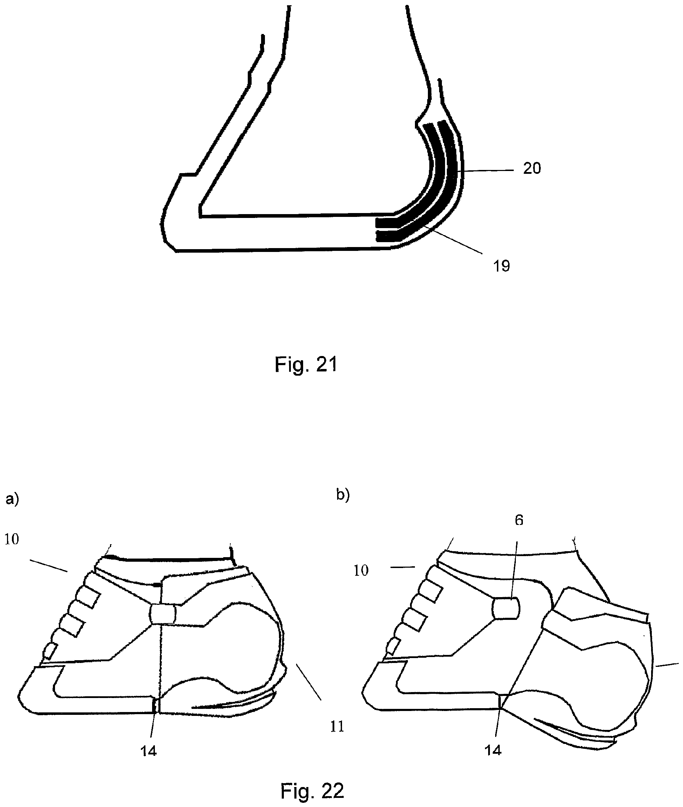

As indicated in figure 10 and 22 the shoe 1 is opened with an outer lock-, securing-, and adjustment mechanism 6. The shoe may according to one aspect of the present invention be divided horizontally in the centre, so that the hoof easily enters the shoes frontal part 10 before the at least one rear part 11 is closed over the rear part of the hoof.

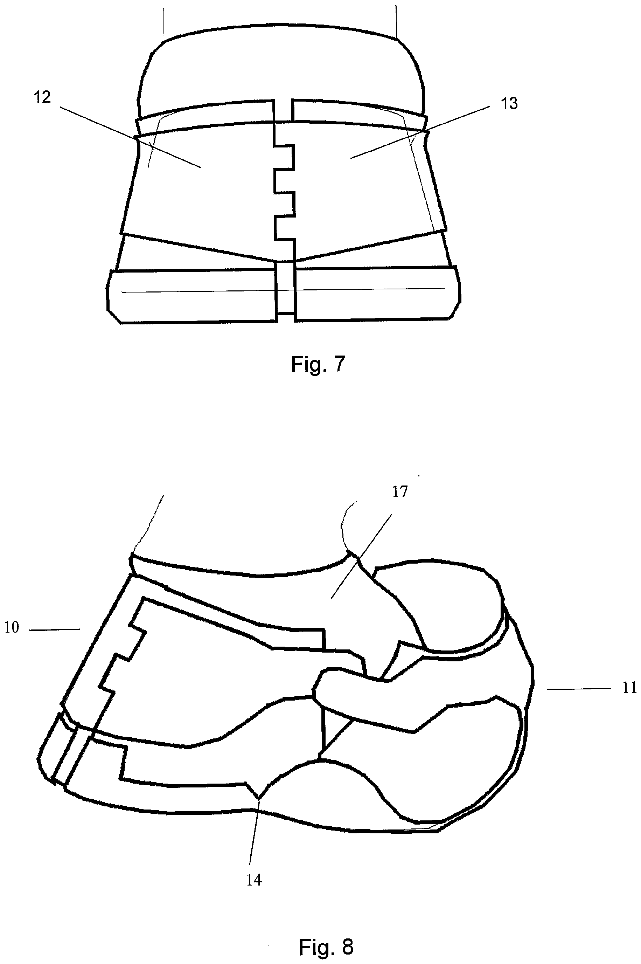

This ensures that the shoe is tightly fit as it is not mounted by press fit but it is enclosed by lockable parts. The split solution facilitates observation of the hoofs positioning in the shoe. The shoe is completely adapted to the hoof by the outer lock-, securing-, and adjustment mechanism 6 which can easily be narrowed or expanded to give a perfect fit to the hoof. The adjustment is accomplished by flexible parts on either side of the hoof or with flexible parts on one side of the hoof. The principle of a shoe that is divided by joints and separate parts that can be drawn together by appropriate means may also be accomplished by the use of "a one piece material" where the material is given different characteristics and possibly also varying thickness may also give a shoe with the same or substantially the same characteristics as a shoe with a number of parts. Making grooves in a material may give the same effect as the use of a joint between two parts of a material. Appropriate combinations of ductile/elastic materials and/or partitioning of the shoe in two or more parts (fig. 7 and 8) will result in a shoe that can be given a perfect fit, that protects soft parts of the hoof, that is easy to mount/demount and that is comfortable to the horse.

A lock-, close-, securing-, and adjustment mechanism 6 according to the present invention can be of any type known from alpine boots, bicycle shoes or similar known to the person skilled in the art which can withstand the forces and stress from the hoof of a horse or another hoofed or cloven-hoofed animal. The fit of the shoe is of importance for the ergonomic function, comfort and security. The shoe may be fitted to animals having different size of the hoof; this may be accomplished by having a number of fixed shoe sizes as it is known from shoes for humans. Within each shoe size one will have a degree of freedom to adapt the shoe by using the exterior lock-, close-, securing-, and adjustment mechanism 6, 21 so that when the hoof is growing and is trimmed one may easily adapt the size of the shoe to the changing size of the hoof.

The different parts of a shoe 1 may be of different materials dependent on the purpose of each part. Parts of the shoe may be arranged with reinforcement/armouring which can withstand extra stress and/or shocks so that the shoe is well fitted during use.

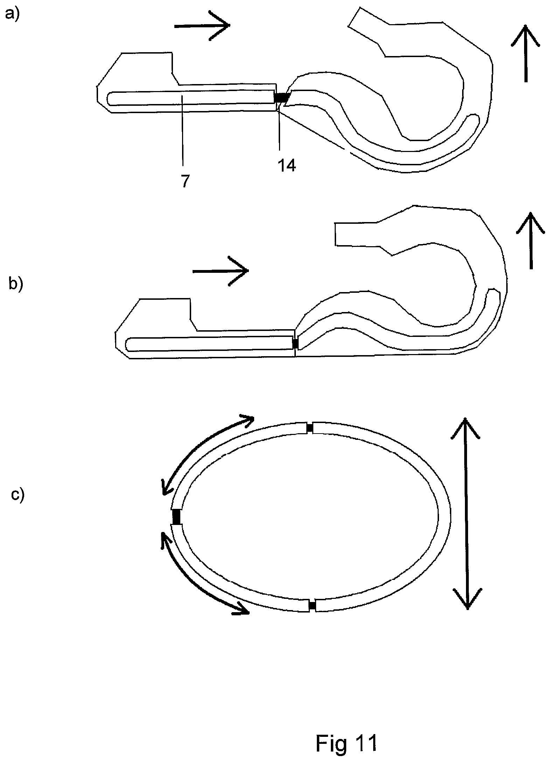

According to one aspect of the invention it will be desirable when a shoe is closed with the adjustment- and locking mechanism 6 that said reinforced/armoured parts exerts a sufficient pressure on the hard/horny non sensitive parts of the hoof, this ensures a good and secure fit while simultaneously maintaining free movement of the hoof and comfort for the animal. The shoe may additionally be equipped with an inner adjustment and locking mechanism 7 in the lower part of the shoe which ensures extra tightening when the shoe is locked as said armouring/reinforcement will be tensioned. An example of an interior lock-, and adjustment mechanism is shown in detail in figure 11, a, b and c. The inner lock-, and adjustment mechanism will be slackened when the lock-, and adjustment mechanism 7 is opened thereby facilitating demounting the shoe 1.

As the shoe according to one embodiment comprises a sole with adjacent sidewalls made of an elastic material one will achieve an elastic contacting surface towards the area of the hoof which is in contact with the shoe 1, both during tightening, loosening and during use and thereby get a shoe which has optimal fit and simultaneously have the ability to absorb stress from the hoof when the hoof expands and contracts.

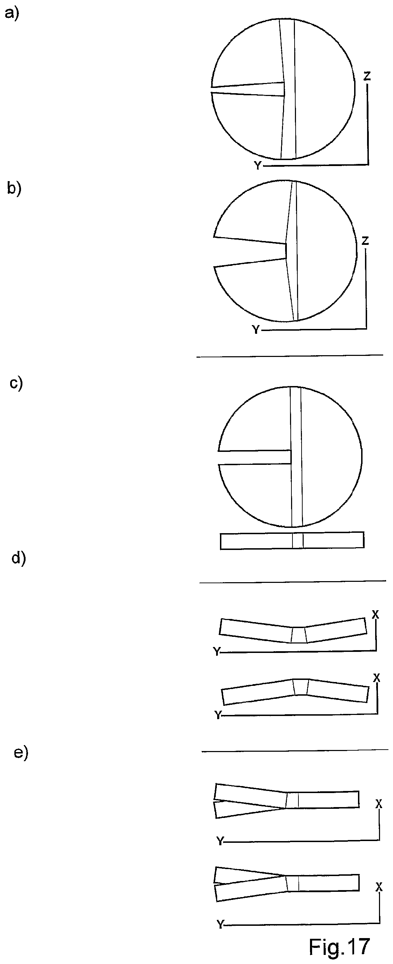

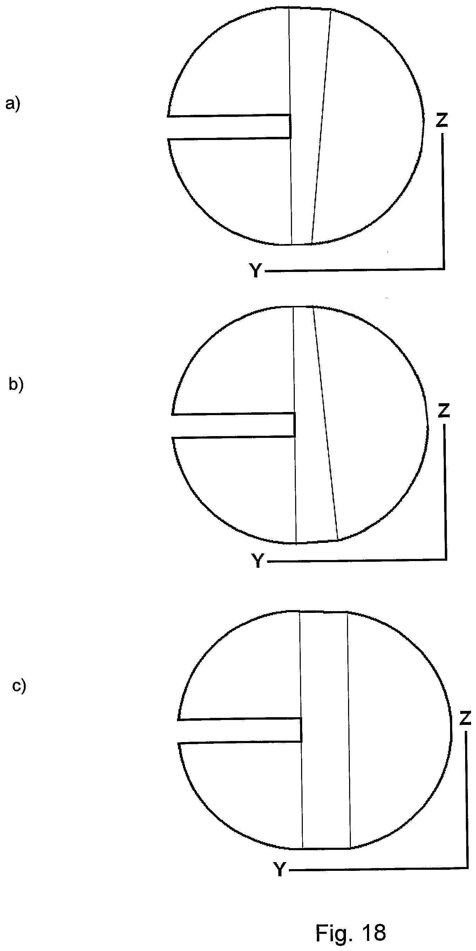

An object according to the present invention is to provide a shoe that is flexible and movable in relation to the movements of the hoof and thus fits the contour of the hoof and its movement, ref fig. 17 and 18. This is facilitated by an embodiment that comprises two or more sole segments, ref. fig 9 2,3,4. This flexibility may also be achieved by using a material or materials that have appropriate flexibility in it.

In one embodiment the shoe 1 according to the present invention comprises a number of elements where each single element is appropriately adapted to its task and to the part of the hoof that it is in contact with. It is appreciated that each segment 2, 3, 4 in figure 7 is independently movable. This can be achieved by using flexible transitions between the segments with appropriate joints there between. The connection mechanisms may include mechanic couplings known in the art or it may include a particular elastic material appropriate for the task or any combination thereof. Coupling between segments may also be achieved using adhesive based for example on silicon, composite, buckles, Velcro's®, buttons or screw connections etc. The shoe 1 must be rigid enough to withstand the movement and stress exerted by the hoof and simultaneously be flexible enough to not hamper the natural movements of the hoof. It shall be appreciated that the shoe 1 comprises areas with hard shell and areas with soft shell which facilitates free movement of the hoof and which enables to take up the weight distribution and which absorbs shock. The characteristics of the shoe 1 facilitates the changeover period from shod to barefoot as the horse in a greater extent than what's common with prior art shoes will feel the surface on which it treads.

Segmentation of the sole will simplify shoeing, make the shoeing process safer and faster and improve the fit to the hoof.

A shoe according too the present invention may comprise one or more spherical parts/pellets mainly arranged in the sole 5. The balls/pellets of even or uneven size can be an integrated part of the sole 5; alternatively they may be arranged in the shoe to form a "sole" above the main sole 5. The pellets/balls will act as shock absorbing means when the horse gaits. An alternative is to provide the sole 5 with one or more pockets on its upper face which provides room for free balls/pellets or for an insole with pellets/balls. The inlays or balls/pellets may be accessory that can be customised according to the weight of the animal, in accordance with the surface or the use. The inlay solution may take the form of an insole comprising the flexible material for example in the form of pellets/balls or it may simply be a pouch adapted to be filled with pellets/balls. The pouch or insole may comprise fastening means such as Velcro (R).

Independently of which embodiment that is chosen the goal will be to achieve a shock absorbing effect.

Additionally according to one embodiment of the present invention the shoe 1 may have a sole 5 design which prevents moisture from entering into the shoe. Further it may comprise breathable fabric/material on its sidewalls. The fabric/material may be of a type which allows moisture to evacuate the shoe while simultaneously preventing moisture from entering the shoe 1. The sole 5 may also be fully or in part provided with materials that are permeable to vapour while being impermeable to liquids.

The shoe 1 can be designed in carbon composites, aramid composites, elastomer or any combination thereof. Customising of the characteristics of the materials may be achieved by combining reinforcement fibres that are arranged in different directions and in different thicknesses as is known to the person skilled in the art. Furthermore different reinforcement material may be used in different areas hence making the shoe customised to the need of the hoof, i.e. protecting characteristics over soft areas, flexible characteristics over areas that are subject to contraction/expansion. The sole segments (2, 3, 4) will in combination or in addition to the customising material further expand the usability of the shoe 1.

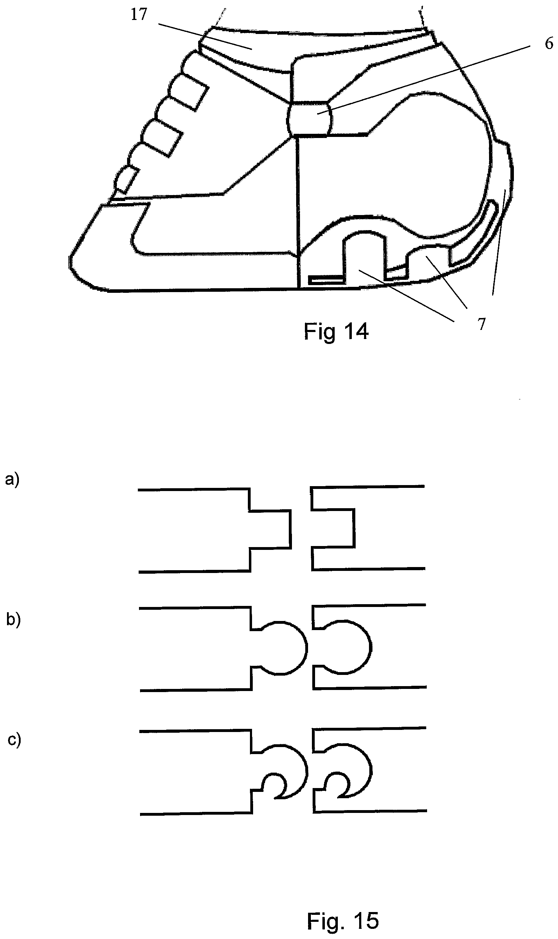

According to one embodiment the heel portion of the shoe 1 comprises flexible parts 9 and a hard shell 8 (fig. 6). With reference to figure 3 it shall be appreciated that the shoe according to this embodiment ensures the horses, or any other hoofed or cloven hoofed animals, natural movement. In accordance to the above the flexible and hard shell part may be customised using different configurations of composites and fibres with appropriated orientations. Parts made from form casted or injection moulded materials may be used in combination with the customised materials described or alone. The shoe 1 may comprise one or more shock absorbing cushions 15 (fig. 6, 10, 14) composed of at least one of; air, liquid, elastomer, gels, spring or balls/pellets as described above.

Mounting and demounting may be accomplished without use of any custom-made tool and preferably without the use of screws, screwdrivers or other equipment.

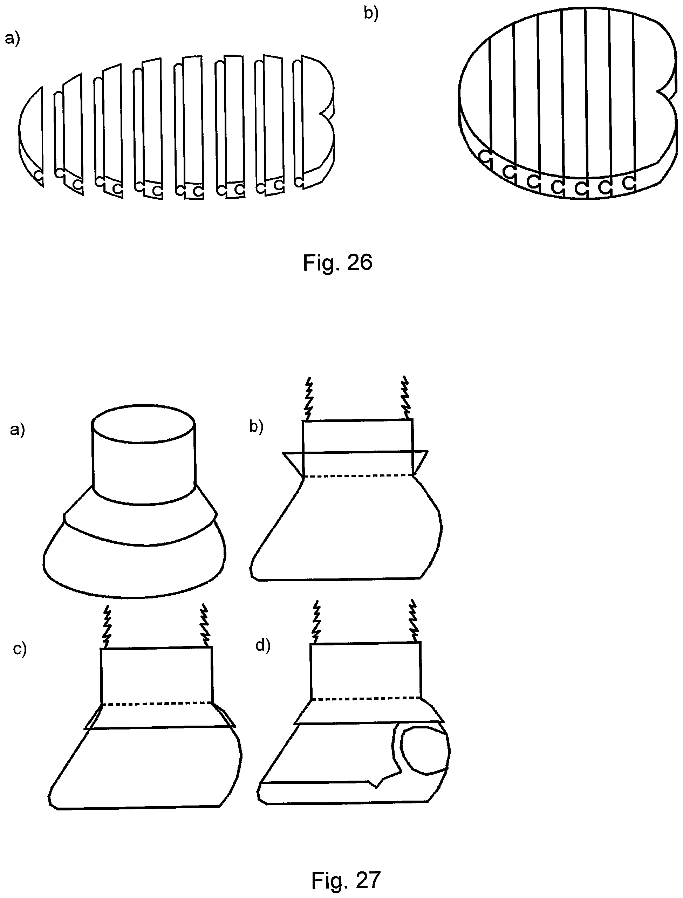

In figures 8 and 27 it is shown an embodiment according to one aspect of the invention including an interior sock. The sock will give some protection, it may also prevent soreness, it may improve the fit of the shoe 1 further, still further it will prevent foreign objects from entering the shoe 1. Figure 27 a show the sock 17, figure 27 b shows the sock 17 drawn over the hoof with a folding in upward direction, figure 27 c shows the folding in a downward direction and finally figure d shows an example of the sock 17 fully mounted on a hoof with the folding over the shoe.

The sole segments 2, 3, and 4 can be designed in any appropriate material as indicated above or in any appropriate combination thereof, furthermore even the sole 5 can be made ventilating. It will be appreciated that the shoe 1 and the sole 5 is easy to clean and tolerates use of chemicals for cleaning. The weight of the shoe is also a concern and a favourable weight may be obtained using the right combination of materials and production technique.

In one embodiment the shoe 1 is made by a number of replacement parts which facilitates maintenance and service and which further enables to custom made the shoe according to use and weight of the horse, even by the horse owner himself. The parts may be fixed together using quick release couplings, bayonet couplings, Velcro ®, buttons etc. One may even imagine having interchangeable soles 5 where the sole have a frictional coefficient custom made for the surface and for winter use even provide the sole 5 or parts of the sole with frost nails.

The shoe 1 according to the present invention may comprise a ventilation system 16 (fig. 10) facilitating adaptation to weather conditions. The shown system is of a mechanical type which renders it possible to open and close air vents. The ventilation system 16 may be the only ventilation system or it may be combined with venting fabrics/materials as described above. The sole in itself may be provided with pinhole sized air vents adequate to prevent liquid from entering and big enough to enable vapour transportation. The upper side of the sole 5 may be provided with a membrane that is ventilating and which is vapour permeable but which prevents liquid transportation.

Sharp or harmful objects must be prevented from entering the sole, this is merely a question of material design, and the person skilled in the art may achieve this goal by using materials and production techniques as indicated above.

## Claims

1. Sole (5) for a shoe adapted for use on hoofed or cloven-hoofed animals **characterised in that** the sole (5) is assembled into a single peace at least comprising:
a forward (2, 3), a rear part (4) and at least a coupling/joint (14) arranged substantially transversal to the front back axis of the sole, where the sole assembly forms an integral part, and where the at least one coupling/joint (14) is one of:
grooves, a ductile/elastic material, mechanical couplings, silicon, composite, a combination of a hinge and an elastic material or buckles,
which allows the at least one forward part (2,3) and the at least one rear part (4) to move completely or partly independent of each other when shooing the hoofed or cloven-hoofed animals and during use.

2. A shoe adapted for use on hoofed or cloven-hoofed animals comprising a sole (5) according to claim 1, with sides protruding from the sole (5) and fixed to the perimeter of the sole (5) **characterised in that** the shoe (1) comprises at least one forward (10) and at least one rear (11) part protruding from the sole (5) and fixed to the perimeter of the sole (5) ;
the at least one forward part (10) comprises two side pieces (12,13) which at its bottom end is fixed to the sole (5) in a substantial part of the forward parts' (10) perimeter so that the side pieces (12,13) when the shoe (1) is mounted on a hoof completely or partly encloses the forward part of the hoof, and
the at least one rear part (11) comprises a soft and flexible frame (9) encapsulated in a shell material (8), so that the sole (5), the rear part (11) and side pieces (12,13) together forms the shoe (1) for use on hoofed or cloven-hoofed animals.

3. Shoe according to claim 2,
**characterised in** at the shoe (1) further comprise:
at least one lock-, securing-, and adjustment mechanism (6) designed to adjust/tightening, fasten and securing the rear side piece (8) to the side pieces (12,13).

4. Shoe according to claim 2 ,
**characterised in that** the shoe (1) further comprise:
at least one flexible band like element fixed to both side pieces (12,13) and the rear side piece (8) to achieve a flexible connection between the rear sidepiece (8) and the side pieces (12,13).

5. Shoe according to one or more of the claims 2 - 4,
**characterised in that** the shoe (1) at its rear end comprises a soft ductile material (15).

6. Shoe according to one or more of the claims 2 - 5 ,
**characterised in that** one or more of the parts of the shoes (1) is interchangeable modules which can change the function, the size and/or range of use of the shoe.

7. Shoe according to one or more of the claims 2 - 4,
**characterised in that** the shoe (1) at least comprise one of the following:
at least one shock absorbing element;
one shock absorbing section, or
at least one pocket adapted to house at least one shock absorbing element (15), for absorbing any type of impact against the hoof or cloven-hoof.

8. Shoe according to one or more of the claims 2 - 7,
**characterised in that** the shoe (1) on the inside and/or outside of the shoe (1) comprise a layer of gel, elastomer or any other elastic material.

9. Shoe according to one or more of the claims 2 - 8,
**characterised in that** the sole (5) of the shoe (1) is provided with pellets or ball like bodies (18).

10. Shoe according to one or more of the claims 2 - 9,
**characterised in that** the shoe (1) comprise pellets or ball like bodies (18) arranged on the upper side of the sole (5) or on the underside of the sole (5).

11. Shoe according to claim 9 or 10,
**characterised in that** the pellets or ball like bodies are interchangeably arranged in pockets in the sole (5), or
that the pellets or ball like bodies are arranged in pouches adapted to be placed on the sole (5) within the shoe to thereby facilitating replacement of the pouches.

12. Shoe according to one or more of the claims 2 - 11,
**characterised in that** the shoe (1) is designed with a number of elements (19, 20), where elements that surrounds soft tissue/parts is designed in a protecting material suitable as a shell, elements that encloses solid parts of a hoof is designed in a durable material and an element encompassing a moving part is designed in an elastic material, where said elements can be provided with means for moisture transportation by providing apertures/pores or semipermeable membranes.

13. Shoe according to claim 12,
**characterised in that** said elements (19,20) is provided with means for moisture transportation by providing apertures/pores or semipermeable membranes.

14. Shoe according to one or more of the claims 2 - 13,
**characterised in that** the shoe (1) comprise one or more vents (16) and further one or more opening- closing mechanisms rendering it possible to open and close the air vents (16).

15. Shoe according to one or more of the claims 2 - 14,
**characterised in that** the shoe (1) comprise an inner sock (17) fixed or interchangeably fixed to the shoe (1) .

16. Shoe according to one or more of the claims 2 - 14,
**characterised in that** the shoe (1) further comprise a sock (17) adapted to be drawn over the hoof, said sock further being adapted to be folded over an upper edge of the shoe (1) thereby providing a function of a spat/gaiter.

17. Shoe according to one or more of the claims 2 - 16,
**characterised in that** the shoe (1) or parts of the shoe (1) comprise a material allowing damp and gas to penetrate and preventing fluid transportation.

18. Shoe according to one or more of the claims 2 - 17,
**characterised in that** the shoe (1) partly or completely is designed as a sandwich construction where a intermediate layer is made as a fabric with breathing capabilities which prevents moisture to penetrate into an inner layer the inner layer is made by a material **characterised by** its good moisture transporting qualities.

## Patentansprüche

1. Sohle (5) für einen Schuh, welcher zur Verwendung auf Huftieren oder Paarhufern geeignet ist, **dadurch gekennzeichnet, dass** die Sohle (5) einstückig zusammengesetzt ist und mindestens aufweist:
- einen vorderen (2, 3) und hinteren Teil (4) und mindestens eine Verbindung/ein Gelenk (14), im Wesentlichen quer zur von vorne nach hinten laufenden Achse der Sohle angeordnet, wobei die Sohlenanordnung einen integralen Bestandteil bildet, und wobei die mindestens eine Verbindung/das mindestens eine Gelenk (14) eine bzw. eines der folgenden ist:
- Furchen, ein biegsames/elastisches Material, mechanische Verbindungen, Silikon, ein Komposit, eine Kombination eines Scharniers und eines elastischen Materials oder Schnallen, welche es erlauben, den mindestens einen vorderen Teil (2, 3) und den mindestens einen hinteren Teil (4) vollständig oder teilweise unabhängig voneinander zu bewegen, wenn die Huftiere oder Paarhufer behuft werden und während der Anwendung.

2. Ein Schuh, angepasst zur Verwendung auf Huftieren oder Paarhufern, aufweisend eine Sohle (5) gemäss Anspruch 1, mit Seiten, welche von der Sohle (5) hervorstehen und am Umfang der Sohle (5) befestigt sind, **dadurch gekennzeichnet, dass** der Schuh (1) mindestens einen vorderen (10) und mindestens einen hinteren (11) Teil, aufweist, welche von der Sohle hervorstehen und am Umfang der Sohle (5) befestigt sind; dass der mindestens eine vordere Teil (10) zwei Seitenteile (12, 13) aufweist, welche an seinem unteren Ende an der Sohle (5) in einem wesentlichen Teil des Umfangs des vorderen Teils (10) befestigt ist, sodass die Seitenteile (12, 13), wenn der Schuh (1) auf einem Huf befestigt ist, den vorderen Teil des Hufs vollständig oder teilweise umschliesst, und dass der mindestens eine hintere Teil (11) einen weichen und flexiblen Rahmen (9) aufweist, welcher in einem Hüllenmaterial (8) eingekapselt ist, sodass die Sohle (5), der hintere Teil (11) und die Seitenteile (12, 13) zusammen den Schuh (1) bilden, zur Verwendung auf Huftieren oder Paarhufern.

3. Schuh gemäss Anspruch 2, **dadurch gekennzeichnet, dass** der Schuh (1) ferner aufweist:
mindestens ein Schliess-, Sicherungs- und Anpassungsmechanismus (6), welches ausgebildet ist, das hintere Seitenteil (8) an den Seitenteilen (12, 13) anzupassen/festzuziehen, zu befestigen und zu sichern.

4. Schuh gemäss Anspruch 2, **dadurch gekennzeichnet, dass** der Schuh (1) ferner aufweist: mindestens ein flexibles, bandähnliches Element, welches an beiden Seitenteilen (12, 13) und am hinteren Seitenteil (8) befestigt ist, um eine flexible Verbindung zwischen dem hinteren Seitenteil (8) und den Seitenteilen (12, 13) zu erreichen.

5. Schuh gemäss einem oder mehreren der Ansprüche 2-4, **dadurch gekennzeichnet, dass** der Schuh (1) an seinem hinteren Ende ein weiches, biegsames Material (15) aufweist.

6. Schuh gemäss einem oder mehreren der Ansprüche 2-5, **dadurch gekennzeichnet, dass** ein oder mehrere Teile der Schuhe (1) untereinander austauschbare Module sind, welche die Funktion, die Grösse und/oder den Anwendungsbereich des Schuhs ändern können.

7. Schuh gemäss einem oder mehreren der Ansprüche 2-4, **dadurch gekennzeichnet, dass** der Schuh (1) mindestens eines der folgenden aufweist:
mindestens ein stossdämpfendes Element;
einen stossdämpfenden Abschnitt, oder mindestens eine Tasche, welche ausgebildet ist, mindestens ein stossdämpfendes Element (15) aufzunehmen, zur Absorption eines beliebigen Typs eines Schlags gegen den Huf oder Paarhuf.

8. Schuh gemäss einem oder mehreren der Ansprüche 2-7, **dadurch gekennzeichnet, dass** der Schuh (1) an der Innenseite und/oder Aussenseite des Schuhs (1) eine Schicht eines Gels, Elastomers oder eines beliebigen anderen elastischen Materials aufweist.

9. Schuh gemäss einem oder mehreren der Ansprüche 2-8, **dadurch gekennzeichnet, dass** die Sohle (5) des Schuhs (1) mit Pellets oder ballähnlichen Körpern (18) ausgestattet ist.

10. Schuh gemäss einem oder mehreren der Ansprüche 2-9, **dadurch gekennzeichnet, dass** der Schuh (1) Pellets oder ballähnliche Körper (18) aufweist, welche an der Oberseite der Sohle (5) oder an der Unterseite der Sohle (5) angeordnet sind.

11. Schuh gemäss Anspruch 9 oder 10, **dadurch gekennzeichnet, dass** die Pellets oder ballähnlichen Körper untereinander austauschbar in Taschen in der Sohle (5) angeordnet sind, oder dass die Pellets oder ballähnlichen Körper in Beuteln angeordnet sind, welche ausgebildet sind, um auf der Sohle (5) innerhalb des Schuhs platziert zu werden, um dadurch eine Auswechslung der Beutel zu ermöglichen.

12. Schuh gemäss einem oder mehreren der Ansprüche 2-11, **dadurch gekennzeichnet, dass** der Schuh (1) mit einer Vielzahl von Elementen (19, 20) ausgebildet ist, wobei Elemente, welche weiches Gewebe/Teile umschliessen, aus einem Schutzmaterial, welches als eine Hülle geeignet ist, ausgebildet sind, wobei Elemente, welche harte Teile eines Hufs umschliessen, aus einem widerstandsfähigen Material ausgebildet sind, und ein Element, welches einen beweglichen Teil umschliesst, aus einem elastischen Material ausgebildet ist, wobei die besagten Elemente mit Mitteln zum Transport von Feuchtigkeit ausgebildet sein können, indem sie Öffnungen/Poren oder semipermeable Membranen bereitstellen.

13. Schuh gemäss Anspruch 12, **dadurch gekennzeichnet, dass** die besagten Elemente (19, 20) mit Mitteln zum Transport von Feuchtigkeit ausgebildet sein können, indem sie Öffnungen/Poren oder semipermeable Membranen bereitstellen.

14. Schuh gemäss einem oder mehreren der Ansprüche 2-13, **dadurch gekennzeichnet, dass** der Schuh (1) ein oder mehrere Luftlöcher (16) aufweist, und ferner einen oder mehrere Öffnungs- und Schliessmechanismen aufweist, wodurch eine Öffnung und Schliessung der Luftlöcher (16) ermöglicht wird.

15. Schuh gemäss einem oder mehreren der Ansprüche 2-14, **dadurch gekennzeichnet, dass** der Schuh (1) eine innere Socke (17) aufweist, welche am Schuh (1) befestigt oder austauschbar befestigt ist.

16. Schuh gemäss einem oder mehreren der Ansprüche 2-14, **dadurch gekennzeichnet, dass** der Schuh (1) ferner eine Socke (17) aufweist, welche ausgebildet ist, um über den Huf gezogen zu werden, wobei die besagte Socke ferner ausgebildet ist, über eine obere Kante des Schuhs (1) gezogen zu werden, wodurch eine Funktion einer Gamasche/Stulpe bereitgestellt wird.

17. Schuh gemäss einem oder mehreren der Ansprüche 2-16, **dadurch gekennzeichnet, dass** der Schuh (1) oder Teile des Schuhs (1) ein Material aufweisen, welches es Dunst und Gas erlauben, hindurchzudringen und Flüssigskeitstransport verhindert.

18. Schuh gemäss einem oder mehreren der Ansprüche 2-17, **dadurch gekennzeichnet, dass** der Schuh (1) teilweise oder vollständig als eine Sandwich-Konstruktion ausgebildet ist, wobei eine Zwischenschicht als ein Gewebe mit Atmungsfähigkeit ausgebildet ist, welche es Feuchtigkeit daran hindert, in eine innere Schicht durchzudringen, wobei die innere Schicht aus einem Material ausgebildet ist, welches durch seine guten feuchtigkeitstransportierenden Qualitäten gekennzeichnet ist.

## Revendications

1. Semelle (5) pour une chaussure adaptée pour une utilisation sur des animaux à sabots ou à sabots fendus **caractérisée en ce que** la semelle (5) est assemblée en une pièce unique comprenant au moins: une partie avant (2, 3), une partie arrière (4) et au moins un accouplement / articulation (14) disposé sensiblement transversalement par rapport à l'axe avant-arrière de la semelle, où l'agencement de semelle forme une partie intégrale, et où l'au moins un accouplement / articulation (14) est un parmi:
rainures, un matériau ductile/elastique, accouplements mécaniques, silicone, composite, une combinaison d'une charnière et d'un matériau élastique ou boucles,
qui permet à l'au moins une partie avant (2, 3) et à l'au moins une partie arrière (4) de se déplacer complètement ou partiellement indépendamment l'une de l'autre lorsque les animaux à sabots ou à sabots fendus sont chaussés et pendant l'utilisation.

2. Un chaussure adaptée pour l'utilisation sur des animaux à sabots ou à sabots fendus comprenant une semelle (5) selon la revendication 1, avec des côtés dépassant de la semelle (5) et fixée au périmètre de la semelle (5) **caractérisée en ce que** la chaussure (1) comprend au moins une partie avant (10) et au moins une partie arrière (11) dépassant de la semelle (5) et fixée au périmètre de la semelle (5) ; l'au moins une partie avant (10) comprend deux pièces latérales (12, 13) qui, à son extrémité inférieure, sont fixées à la semelle (5) dans une partie substantielle du périmètre des parties avant (10) de sorte que les pièces latérales (12, 13), lorsque la chaussure (1) est montée sur un sabot, enferme complètement ou partiellement la partie avant du sabot, et
l'au moins une partie arrière (11) comprend un cadre souple et flexible (9) encapsulé dans un matériau de coque (8), de sorte que la semelle (5), la partie arrière (11) et les pièces latérales (12, 13) forment ensemble la chaussure (1) pour l'utilisation sur des animaux à sabots ou à sabots fendus.

3. Chaussure selon la revendication 2, **caractérisée en ce que** la chaussure (1) comprend en outre:
au moins un mécanisme de verrouillage, de fixation et de réglage (6) conçu pour régler / serrer, fixer et
fixer la pièce latérale arrière (8) au pièces latérales (12,13).

4. Chaussure selon la revendication 2, **caractérisée en ce que** la chaussure (1) comprend en outre:
au moins un élément flexible en forme de bande fixé aux deux pièces latérales (12, 13) et à la pièce latérale arrière (8) pour réaliser une liaison flexible entre la pièce latérale arrière (8) et les pièces latérales (12,13).

5. Chaussure selon une ou plusieurs des revendications 2 à 4, **caractérisée en ce que** la chaussure (1) à son extrémité arrière comprend un matériau souple et ductile (15).

6. Chaussure selon une ou plusieurs des revendications 2 à 5, **caractérisée en ce qu'**une ou plusieurs des parties des chaussures (1) est/sont des modules interchangeables qui peuvent changer la fonction, la taille et / ou la plage d'utilisation de la chaussure.

7. Chaussure selon une ou plusieurs des revendications 2 à 4, **caractérisée en ce que** la chaussure (1) comprend au moins l'un des éléments suivants:
au moins un élément amortisseur de choc;
une section amortisseur de choc, ou
au moins une poche adaptée pour loger au moins un élément amortisseur de choc (15), pour absorber tout type d'impact contre le sabot ou le sabot fendu.

8. Chaussure selon une ou plusieurs des revendications 2 à 7, **caractérisée en ce que** la chaussure (1) à l'intérieur et / ou à l'extérieur de la chaussure (1) comprend une couche de gel, d'élastomère ou de tout autre matériau élastique.

9. Chaussure selon une ou plusieurs des revendications 2 à 8, **caractérisée en ce que** la semelle (5) de la chaussure (1) est pourvue de pastilles ou de corps en forme de bille (18).

10. Chaussure selon une ou plusieurs des revendications 2 à 9, **caractérisée en ce que** la chaussure (1) comprend des pastilles ou des corps en forme de bille (18) disposés sur la face supérieure de la semelle (5) ou sur la face inférieure de la semelle (5).

11. Chaussure selon la revendication 9 ou 10, **caractérisée en ce que** les pastilles ou corps en forme de billes sont disposés de manière interchangeable dans des poches adaptées pour être placées sur la semelle (5) à l'intérieur de la chaussure, pour faciliter ainsi le remplacement des poches.

12. Chaussure selon une ou plusieurs des revendications 2 à 11, **caractérisée en ce que** la chaussure (1) est conçue avec un nombre d'éléments (19, 20), où les éléments qui entourent les tissus mous / les parties molles sont conçus dans un matériau de protection approprié comme coque, des éléments qui renferment des parties solides d'un sabot est conçu dans un matériau durable et un élément englobant une partie mobile est conçu dans un matériau élastique, où lesdits éléments peuvent être pourvus de moyens pour le transport d'humidité en prévoyant des ouvertures / pores ou des membranes semi-perméables.

13. Chaussure selon la revendication 12, **caractérisée en ce que** lesdits éléments (19, 20) pourvus de moyens pour le transport d'humidité en prévoyant des ouvertures / pores ou des membranes semi-perméables.

14. Chaussure selon une ou plusieurs des revendications 2 à 13, **caractérisée en ce que** la chaussure (1) comprend un ou plusieurs bouches (16) et en outre un ou plusieurs mécanismes d'ouverture-fermeture permettant d'ouvrir et de fermer les bouches d'aération (16).

15. Chaussure selon une ou plusieurs des revendications 2 à 14, **caractérisée en ce que** la chaussure (1) comprend une chaussette intérieure (17) fixée ou fixée de manière interchangeable à la chaussure (1).

16. Chaussure selon une ou plusieurs des revendications 2 à 14, **caractérisée en ce que** la chaussure (1) comprend en outre une chaussette (17) adaptée pour être tirée sur le sabot, ladite chaussette étant en outre adaptée pour être repliée sur un bord supérieur du chaussure (1) assurant ainsi une fonction de guêtre.

17. Chaussure selon une ou plusieurs des revendications 2 à 16, **caractérisée en ce que** la chaussure (1) ou des parties de la chaussure (1) comprennent un matériau laissant pénétrer l'humidité et des gaz et empêchant le transport de fluide.

18. Chaussure selon une ou plusieurs des revendications 2 à 17, **caractérisée en ce que** la chaussure (1) est partiellement ou complètement conçue comme une construction en sandwich dans laquelle une couche intermédiaire est réalisée sous la forme d'un tissu avec des capacités respiratoires qui empêche l'humidité de pénétrer dans une couche intérieure, la couche intérieure étant constituée d'un matériau **caractérisé par** ses bonnes qualités de transport d'humidité.
